# EUROPEAN PATENT APPLICATION

(11) **EP 4 016 426 A1**
(43) Date of publication of application: **22.06.2022**
(21) Application number: 20214112.3
(22) Date of filing: 15.12.2020
(51) Int. Cl.: G06Q 20/16, G06Q 20/32

(54) **METHOD AND SYSTEM FOR EXCHANGING SMS, MMS AND/OR CALL INTO CASH OR FUNDS IN A BANK ACCOUNT**

(71) Applicant: Ciubotaru, Lucian-Manuel, 600010 Bacau (RO); Stroie, Danut, 900415 Navodari Constanta (RO)
(72) Inventor: Ciubotaru, Lucian-Manuel, 600010 Bacau (RO); Stroie, Danut, 900415 Navodari Constanta (RO)

(57) **Abstract**

The present invention provides a method and system that allows a person to request money be transfered into an indicated bank account or to receive them cash via a request from a mobile device, based on a list of codes or a specific request. The method and system works for and can be accessed by customers with prepaid credit cards, rechargeable prepay, for voice calls, SMS or MMS, for each provider of public electronic communications networks.

## Description

### Field of the Invention

This invention is generally related to the field of banking, credits and electronic communications.

### Description of Prior Art

Payments via mobile phone are known and used by the general public to purchase services, products or goods.

Also, online wallets are based on mobile phone operation and are known and used by the general public to perform various services. From the analysis, the methods known and applied internationally, the mobile payments refer to payment services through a mobile device, as an alternative to payment methods by credit card, check or cash, the concept being the use of digital currency.

Therefore, service providers through mobile payments or the use of the mobile wallet, have a somewhat common approach to the services offered to the public consumer, offering possibilities such as, cash deposits, cash withdrawals, credit transfers to prepaid account, cash transfers to and from other users, transfers of credits for operation from one user to another, payment of utility bills, purchases of services or goods and other.

All the services offered to the general public by operators - providers have the final purpose of selling the products to the final customer.

In relation to them, the novelty of this invention is a different approach putting in the focus and having as purpose the purchase of services, offering the possibility to the beneficiary to sell respectively to monetize the credits of the mobile network operator.

The method proposed is different from the existing services on the market. The following patented solutions, which operate in the field of mobile telephony, are also publicly known, but none of them offer the service that is the subject of our innovation. In relation to the patent US20150026059A1, the patented method allows a person to request a deposit of money in the account or by debiting an account associated with the client. Specifically, a wallet can be replenished by card or account, and the amounts can be sent by transfer to another person, such as Western Union, Money Gram etc. Our method offers the possibility that by calling a value-added number, or sending a message via SMS / MMS, the beneficiary receives the cash value or the corresponding funds in his or her personal bank accounts.

In relation to patent WO2007024150A1, that involves registering the phone number in a database of the seller so the benefits of virtual credit purchases that can be returned later from the customer's current accounts, our method and system offers the possibility that by calling a value-added number, or sending a message via SMS / MMS, the beneficiary receives the cash value or the corresponding funds in the indicated personal accounts.

In relation to patent WO2012003842A1 - method and system of payment and processing of all financial operations using Wireless, Landline and mobile phone credit as alternatives to the transfer of money or the use of credit cards. The above description refers to the financial payment and processing system that uses credit. The alternative to transferring money or paying with cards. In relation to this system, the present invention does not process payments and does not transfer or transmit credits or amounts of money between users of a telephone service. The system does not mediate and does not exchange credit, does not transfer credit between clients and does not sell credit to the customers. The method concerns the customer that calls the number with added value, sends SMS / MMS in exchange for the call, and SMS / MMS receives cash or funds in the indicated bank account by transfer from own funds. The customer actually buys cash by calling value-added numbers or sending value-added SMS / MMS, the suppliers sell that cash or transfer it to the indicated account.

In relation to the patent IES20080129A2, a method and a system for processing an SMS message or for performing a process in response to an SMS message from an activated SMS device. This method concerns a message processing system, the system aims at the transfer of funds by associating a telephone number with the account or bank card. The disclosed method refers strictly to the availability of a sum of cash or by transfer made between accounts from the supplier accounts to the beneficiary's accounts in exchange for calling by the beneficiary some value-added telephone numbers or sending value-added messages / SMS. The novelty in relation to the prior state of art also refers to the listing of some numbers with added value and short SMS / MMS numbers with added value with the cost of their calling by the clients and the delivery in exchange of some sums of cash or in the accounts indicated by the customer.

In conclusion, the patents stated above are similar as a mode of operation using electronic service operators, but none of them has as finality the novelty of the present invention. The innovative features of our product for the acquisition of value-added services are unique by making available to the public their own financial funds in order to ensure immediate settlement to the beneficiary of the value of SMS, MMS, or value-added call.

### Summary of the Invention

The method and system work between the mobile operator, its subscriber and the website or web platform. Any holder of a subscription on the basis of a contract with a mobile telephone operator has the possibility through the web platform provided to transform the equivalent value of the call / SMS / MMS cost or of the bonuses offered by the mobile telephone operator into cash or money in the indicated account.

Specific network services, provided through the web platform, the online method and the offline method regarding the use of short value-added numbers, national and international, short SMS and MMS codes, and value-added telephone calls, internal and external, will be made available to the public through the web platform.

The innovative method gives the user the possibility to transform into cash the value of the service accessed as beneficiary - end user. The services can also be accessed through franchisors - subcontractors, direct or indirect contractors or agents, through work points, in closed or open spaces, both nationally and internationally, so that they can benefit a community and intra-community public as widely as possible, in a non-discriminatory manner. In this sense, and in order to achieve the purpose of providing the specific value-added network service, steps will be taken to contract all providers of public electronic communications networks in each country worldwide, or value-added service providers.

### Brief description of the drawings

The attached figures and drawings show, as illustrative examples, embodiments of the present invention:

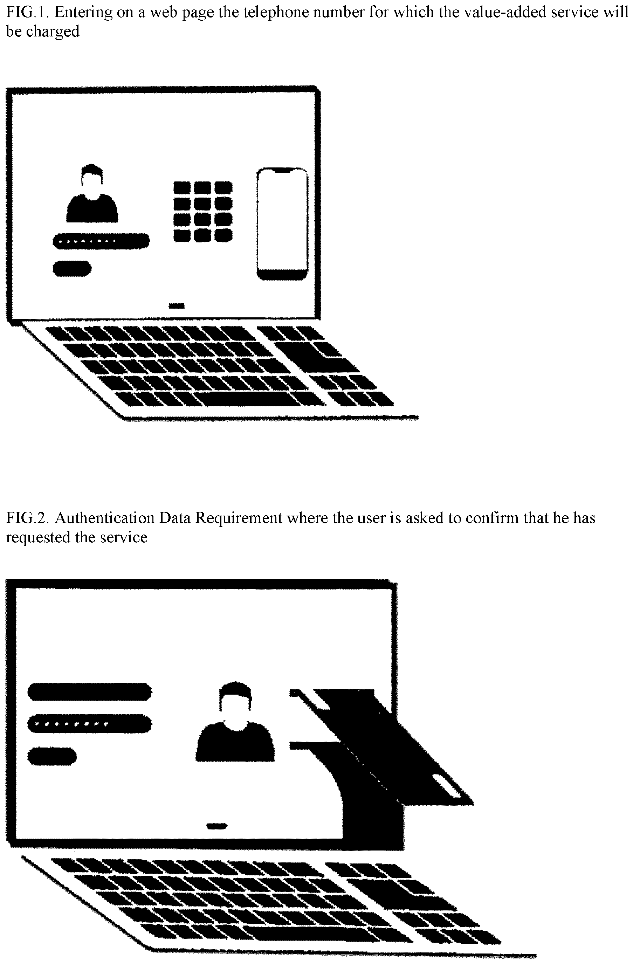

FIG. 1 provides an illustration of a web interface of entering the telephone number on a web page for which the value-added service will be charged
FIG. 2 provides an illustration of web interface of authentication data requirement where the user is asked to confirm that he has requested the service

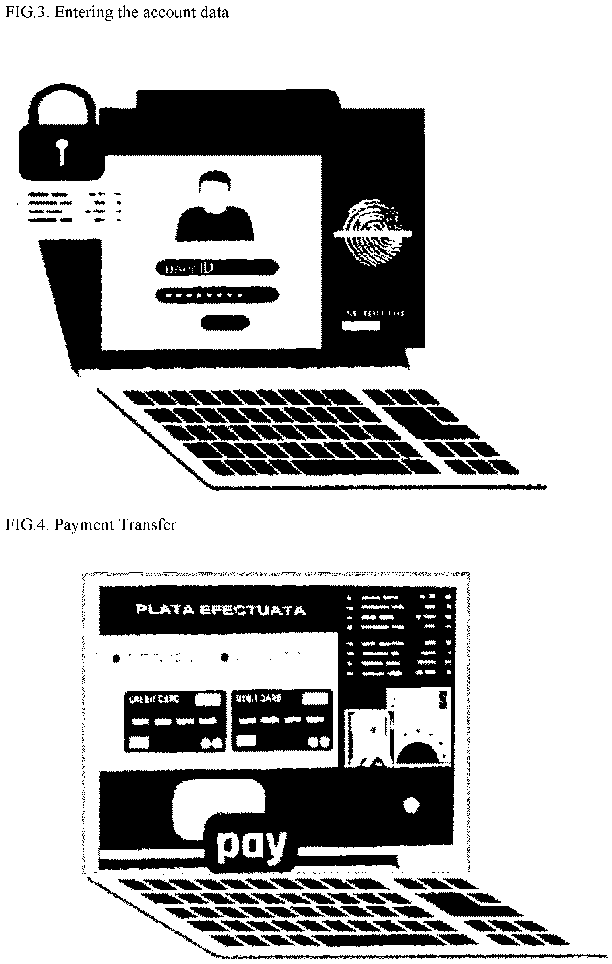

FIG.3. provides an illustration of web interface of entering the account data
FIG.4. provides an illustration of web interface with the payment transfer

### Detailed description of the invention

The technical solution of the invention, highlighting the elements of original scientific or technical creation that solve the mentioned technical problem is that the amount of the value-added service accessed by the customer can be received immediately in the account indicated by him through payment order debit between intrabank accounts through the payment integrator software connected to banking APIs, or by other payment methods expressly requested by the client and available to the operator like Paypal, Revolut card or cash at work points.

The user initiates the order process by sending to a number / short code an SMS message originated by the user (mobile originated), containing a keyword or a code. Following the initial keyword or correct code, the service will be provided directly. Direct command can only be used for services involving small and/or fixed amounts, services where the keyword is a unique code generated by a web application. It can be repeated in the form of single payment following the same method and scheme for the realization of the SMS / MMS service.

The user sends a message with the "content of the message" = the keyword or the correctly published code, listed (in case of CREDITE SMS SRL it can be NAME and IBAN or the dates where is wanted to transfer the amount of the value-added service, Revolut payment, Paypal). The user will receive a response via SMS, free of charge, informing about the tariff associated with the service, how to continue the ordering process and, optionally, other information considered useful for the proper provision of the service. The provision of the service and the application of the tariff related to the service will be made only if the user confirms the order through a new mobile originated SMS message initiated by the user (SMS-MO), following which he will receive in response a SMS message received by the user, mobile terminated (SMS-MT) informing him about the tariff associated with the service and details about the actual delivery.

The provision of the service and the application of the tariff related to the service will be made only if the user confirms the order through an SMS-MO, which will receive in response a SMS-MT, informing about the tariff associated with the service and details about the actual delivery.

The voice payments are an easy and secure method that can be used with a simple phone call. After selecting a package that will include the cost / call and its value to be collected, the customer will be asked to call a premium number. He will receive an access code to complete the payment by following the steps in the window, after which will receive a text message on the phone number from which the call was initiated, informing if the payment has been successfully confirmed or not, in which case the user will be able to repeat the call following the same payment steps.

The value-added services order described above are valid and can be accessed by customers with prepaid credit cards, rechargeable prepay. The services will be available and will apply for voice calls, SMS or MMS and internationally for each provider of public electronic communications networks in the country where the value-added service activity is to be carried out, as a provider.

Value added international voice calls will work by country selection and currency selection that will be taken over automatically, selection of public electronic communications network providers, selection of value-added service or value-added service provider, (processor with API integration), following the process described above - valid for both on-line and offline services.

The amount of value-added services is paid by their beneficiaries through the invoice related to electronic communications services or, in the case of prepaid services, by withholding the value of the purchased credit, not being included in the number of SMS / minutes subscription or prepaid card.

The user initiates the online order process by entering on a web page the telephone number where the added-value service will be charged. Following this action, the user receives a free mobile terminated SMS informing him that he has initiated an online order, the rate associated with the service, how to continue (confirm) the order process, including the code / short number used and optional, other information considered useful for the proper provision of the service. The provision of the service and the application of the tariff related to the service will be made only if the user confirms the order by means of an SMS mobile originated, following which he will receive in response an SMS mobile terminated informing about the tariff associated with the service and details about its actual provision.

The provision and development of the value-added services are only possible if a climate of trust in the use of these services by users is created and maintained. In order to avoid abuses or fraud associated with the provision of value-added services, it is necessary to implement adequate mechanisms to protect users regarding the use of value-added services. In this regard, it is necessary to ensure accurate, complete and correct information in all phases of promotion and provision of services. In all activities for the promotion of value added services offered through numbers or short codes or information on the services offered through them, whenever the number or short code related to the service is communicated, it is clearly communicated and unequivocally and the tariff related to it, specifying the method of charging the call or SMS / MMS messages. If the value-added services are accessed by making a voice call by the user, the charging method will be specified, per call or per minute, specifying the minimum duration that will be charged, if applicable.

If the value-added services are accessed by sending several SMS messages by the user (or for a certain content the payment is made by sending several SMS), users must be informed about the number of messages to be sent and their total rate. If certain services are accessible, by their nature, only at certain intervals, users will be informed of the time intervals in which the service can be used. If the technical possibilities of the provider of public electronic communications networks and value-added services provider allow, access in the time slots in which the service cannot be delivered will be restricted or the user will not be charged, or the charge will not exceed the network rate. In the event of the impossibility of technical limitation, alternatively, the parties will establish contractual obligations on the task - provider of value-added services by which to limit charging outside the time slots when the service is not functional. If certain services are accessible only in certain public electronic communications networks, users will be informed about the networks in which the services are accessible.

By implementing the invention, the user benefits from a fast, unique system of obtaining financial funds without any guarantee, funds in whose possession it can enter within just a few minutes. The system offers health safety through the lack of movement, through the option of the lack of human interaction, even in the context of the Covid-19 pandemic.

The innovation offers an extremely easy, convenient, simple service, using only a mobile phone which can but necessary be connected to the Internet. When accessing small amounts, the user is not required to provide any documents or guarantees in order to benefit from access to money, in a non-discriminatory manner, only in compliance with the legal conditions imposed by the state on whose territory the request is made.

Thus, in the online system, the owner of a telephone subscription has the option to collect cash at a franchisor's counter or at one of the work points, or by transfer to the account indicated by him when accessing the web platform. The beneficiary will find the value of the service requested and received in the invoice of the mobile operator issued in the next due month, having the advantage of paying on time.

In conclusion, this method provides instant monetization services of value points available based on mobile subscriptions, regardless of the operator. The method operates between the mobile operator, its subscriber and the web platform operator. Any subscription holder based on a contract with a mobile operator has the possibility, through this method, to convert the value of the SMS / MMS / call cost or the bonuses offered by the mobile operator into cash or money in a bank account. It consists of sending text messages to short numbers with added value, recharging a prepaid card, sending MMS messages to short numbers or recharging the phone card. It works as a monetary fund, which can be benefited of immediately, an alternative to existing pawn services, banking institutions, non-bank financial institutions, without any guarantees being requested.

The customer has the possibility to create an account on the platform, later he can choose a package of services according to the mobile operator with which he has concluded a contract. After choosing the operator and the amount, follows the steps of sending the sms, entering the data, including the account in which he wants to collect the resulting amount, place the order and complete the transaction. A human operator or software module verifies the data and makes the amount available by interbank transfer to the client's account.

The offline way of accessing the service is by calling value-added telephone numbers by knowing and saving telephone numbers and their values, which can be called at any time. This solution involves registering the client account, and after viewing the packages in the special section, adding them to the client account. The numbers can also be registered in the phone book. The transaction follows the rule of dialing the desired number, confirming the agreement to pay the amount charged with yes or no by phone key, after listening to the message explaining the service, followed by sending the account and data where it is wanted to collect the value of the call service by SMS. The service can also be accessed via fixed telephony provided the customer has a mobile phone number, subscription or prepaid card to communicate the transaction completion dates. The method works as well by moving to a physical work point that offers the service, and cashing the chosen amount.

The applicant can benefit from these funds at any time of the day or night, in order to solve small financial emergencies immediately, offering a real financial support mainly to students, pensioners and people with low incomes.

## Claims

1. A method and system comprising:
∘ receiving a monetary request associated with a customer, wherein the monetary request includes a specified amount of money;
∘ debiting a first account;
∘ crediting a second account associated with the customer or collecting it as cash from a partner counter or working point,
**characterised by** a request from a mobile device, including SMS, MMS or voice call, through which the credit request is converted into bank account funding or cash

2. A method according to claim 1 wherein the customer actually receives cash by calling value-added numbers or sending value-added SMS / MMS.

3. A method according to claim 1 wherein the customer receives amounts of money in the indicated bank account by calling value-added numbers or sending value-added SMS / MMS.
